# EUROPEAN PATENT APPLICATION

(11) **EP 4 518 203 A1**
(43) Date of publication of application: **05.03.2025**
(21) Application number: 23795091.0
(22) Date of filing: 17.04.2023
(51) Int. Cl.: H04L 1/00

(54) **RIS STATE FEEDBACK METHOD AND APPARATUS, AND RIS STATE RECEIVING METHOD AND APPARATUS**

(30) Priority: 28.04.2022 CN 202210462278
(71) Applicant: ZTE Corporation, Shenzhen, Guangdong 518057 (CN)
(72) Inventor: XU, Fei, Shenzhen, Guangdong 518057 (CN)
(74) Representative: Deambrogi, Edgardo
(86) International application number: PCT/CN2023/088736
(87) International publication number: WO 2023/207658

(57) **Abstract**

The present invention provides a method and apparatus for RIS state feedback and receiving. The method for RIS state feedback includes: a RIS controller feeds back state information to a base station (BS), wherein the state information includes state information of the RIS controller and state information of a plurality of RIS boards managed by the RIS controller. In the embodiments of the present invention, an RIS controller feeds back state information about itself and a RIS board managed thereby to a base station, and the BS can effectively manage states of the RIS controller and the RIS board managed thereby, and detect and process network performance deterioration caused by an abnormality in the state of the RIS controller or the RIS board in time, thereby achieving the effect of improving the network performance.

## Description

### Technical Field

Embodiments of the present invention relate to the field of communications, and in particular, to a method and apparatus for RIS state feedback and receiving.

### Background

A Reconfigurable Intelligent Surface (RIS) is an artificial electromagnetic material with a programmable property. By controlling the phase of each array, the emergent beam can be controlled to focus in a desired direction, thereby implementing control over an electromagnetic environment.

The state management of the RIS has not been taken into account in the prior art.

### Summary

Embodiments of the present invention provide a method and apparatus for RIS state feedback and receiving, so as to at least solve the problem in the related art that a RIS abnormal state cannot be found and solved in time due to the fact that RIS state information cannot be monitored and managed, which causes network coverage abnormality and network performance deterioration.

According to an embodiment of the present invention, a method for RIS state feedback is provided, including: Reconfigurable Intelligent Surface (RIS) controller feeds back state information to a Base Station (BS), wherein the state information includes state information of the RIS controller and state information of a plurality of RIS boards managed by the RIS controller.

According to another embodiment of the present invention, a method for receiving a RIS state is provided. The method includes: receiving, by a Base Station (BS), state information fed back by Reconfigurable Intelligent Surface (RIS) controller, wherein the state information includes state information of the RIS controller and state information of a plurality of RIS boards managed by the RIS controller.

According to another embodiment of the present invention, a RIS state feedback apparatus is provided, which is located in an RIE controller. The apparatus includes: a state feedback module configured to feed back state information to a base station (BS), wherein the state information includes state information about the RIS controller and state information about a plurality of RIS boards managed by the RIS controller.

According to another embodiment of the present invention, a RIS state receiving apparatus is provided, which is located in a base station. The apparatus includes: a state receiving module, configured to receive state information fed back by an RIS controller, wherein the state information includes state information about the RIS controller and state information about a plurality of RIS boards managed by the RIS controller.

According to yet another embodiment of the present invention, also provided is a computer readable storage medium. The computer readable storage medium stores a computer program, and the computer program is configured to, when executed by a processor, implement the steps in any one of the method embodiments.

According to yet another embodiment of the present invention, also provided is an electronic apparatus, including a memory and a processor, wherein the memory stores a computer program, and the processor is configured to run the computer program so as to execute the steps in any one of the described method embodiments.

### Brief Description of the Drawings

Figure 1 is a schematic diagram of an operating network architecture according to embodiments of the present invention;
Figure 2 is a flow diagram of a method for RIS state feedback according to embodiments of the present invention;
Figure 3 is a flow diagram of a method for RIS state active feedback according to embodiments of the present invention;
Figure 4 is a flowchart of a method for RIS state feedback according to embodiments of the present invention;
Figure 5 is a flow diagram of a method for RIS state feedback according to embodiments of the present invention;
Figure 6 is a flow diagram of a method for RIS state receiving according to embodiments of the present invention;
Figure 7 is a flow diagram of a method for RIS state receiving according to embodiments of the present invention;
Figure 8 is a flow diagram of a method for receiving a RIS state indication according to embodiments of the invention;
Figure 9 is a flow diagram of a method for RIS state receiving according to embodiments of the present invention;
Figure 10 is a flow diagram of a RIS controller reporting state information according to embodiments of a scenario of the invention;
Figure 11 is a schematic diagram of state information reported to BS by a RIS controller according to embodiments of the present invention;
Figure 12 is a flow diagram of a RIS controller reporting state information according to embodiments of the present invention;
Figure 13 is a schematic diagram of state information reported to BS by a RIS controller according to embodiments of the present invention;
Figure 14 is a flow diagram of reporting state information by a RISC controller according to embodiments of the present invention scenario;
Figure 15 is a schematic diagram of state information reported to BS by a RIS controller according to embodiments of the present invention;
Figure 16 is a structural diagram of an apparatus for RIS state feedback according to embodiments of the present invention;
Figure 17 is a structural diagram of an apparatus for RIS state feedback according to embodiments of the present invention;
Figure 18 is a schematic block diagram of an apparatus for RIS state receiving according to embodiments of the present invention;
Figure 19 is a schematic block diagram of an apparatus for RIS state receiving according to embodiments of the present invention.

### Detailed Description of the Embodiments

Hereinafter, embodiments of the present invention will be described in detail with reference to the accompanying drawings and in conjunction with the embodiments.

It should be noted that terms such as "first" and "second" in the description, claims, and accompanying drawings of the embodiments of the present invention are used to distinguish similar objects, and are not necessarily used to describe a specific sequence or order.

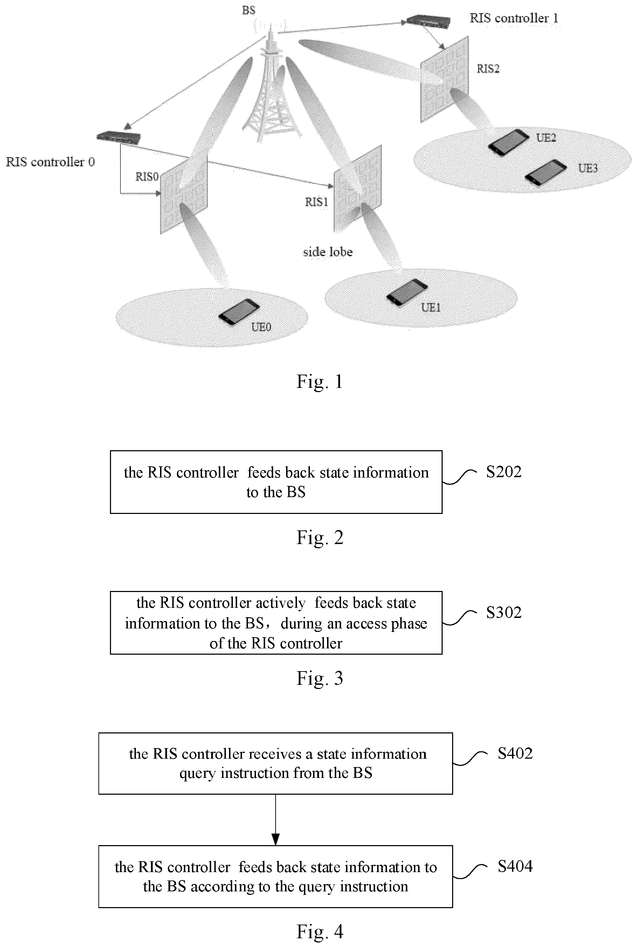

The embodiments of the present invention can run on the network architecture shown in figure 1. As shown in figure 1, the network architecture includes: a base station (BS), a RIS controller (including an RIS controller 0 and a RIS controller 1), a RIS board (including an RIS0, a RIS1 and a RIS2) and user terminals (UE) (including a UE0, a UE1, a UE2 and a UE3), wherein the base station (BS) enhances coverage via the RIS controller 0 and the RIS controller 1, and the RIS controller 0 manages the RIS0 and the RIS1, the RIS controller 1 manages the RIS2, the RIS0 covers the user terminal UE0, the RIS1 covers the user terminal UE1, and the RIS2 covers the user terminals UE2 and UE3.

The present invention provides a method for RIS state feedback running in the described network architecture. Figure 2 is a flowchart of a method for RIS state feedback according to embodiments of the present invention. As shown in figure 2, the method includes the following steps:
At S202: the RIS controller feeds back state information to the BS, wherein the state information includes state information of the RIS controller and state information of a plurality of RIS boards managed by the RIS controller.

By means of the described steps, the RIS controller feeds back state information about a plurality of RIS boards managed by the RIS controller and the RIS controller to the BS, so that the problems in the related art that a network coverage abnormality and network performance deterioration caused by a RIS abnormal state cannot be discovered and solved in time due to the fact that the RIS state information cannot be monitored and managed are solved, thereby improving the capability of monitoring the RIS state information and processing the RIS abnormal condition in time and preventing network performance deterioration.

The entity for performing the foregoing steps may be, but is not limited to, a RISC controller.

In an embodiment, figure 3 is a flowchart of a method for actively feeding back a RIS state according to embodiments of the present invention. As shown in figure 3, the flow includes the following steps:
At S302: the RIS controller actively feeding back state information to the BS. S302 may occur at an initial access stage of the RIS controller to the BS, wherein the RIS controller may complete the access process at the BS through a random access process.

In an embodiment, figure 4 is a flowchart of a method for RIS state feedback according to an embodiment of the present invention. As shown in Ffigure 4, the method includes the following steps:
At S402, the RIS controller receiving a state information query instruction from the BS;
At S404: the RIS controller feeds back state information to the BS according to the query instruction. S402 and S404 described above occur during a stable operation phase of the RIS controller and the plurality of RIS boards managed by the RIS controller.

In the above embodiment shown in figure 4, the RIS controller receives the state information query instruction sent by the BS through a synchronous signal block (SSB) or a physical downlink shared channel (PDSCH).

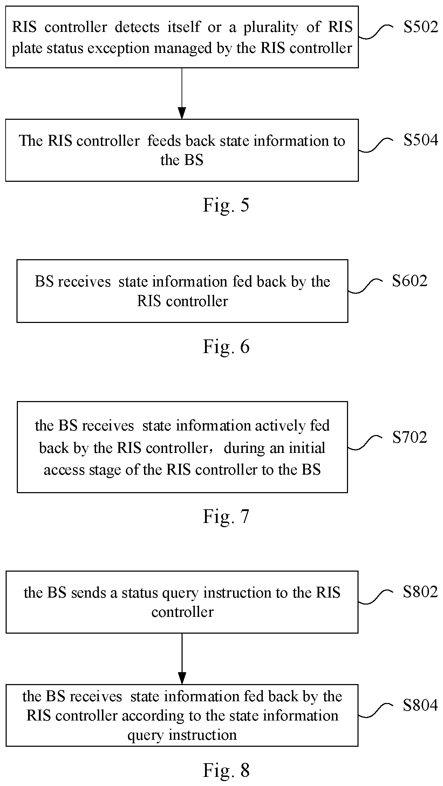

In an embodiment, figure 5 is a flowchart of a method for RIS state feedback according to embodiments of the present invention. As shown in figure 5, the method includes the following steps:
At S502, the RIS controller detects an abnormality of its own or a plurality of RIS plate states managed the RIS controller;
At S504: the RIS controller feeds back state information to the BS. The above-described S502 and S504 occur during a stable operation phase of the RIS controller and a plurality of RIS boards managed by the RIS controller.

In the embodiments shown in figure 2 to figure 5, the state information of the RIS controller may include at least one of an electric quantity state, a power consumption value, a temperature value and an operating state.

In the embodiments shown in figure 2 to figure 5, the state information of each RIS board may include at least one of the following: a power consumption value, a temperature value, a codebook read-back state, a coordinate, an azimuth and a downtilt.

In the embodiments illustrated in figures 2-5 above, the RIS controller may feed back state information to the BS over a Physical Random Access Channel, PRACH, or a Physical Uplink Shared Channel, PUSCH.

The embodiment further provides a method for receiving a RIS state operating in a network architecture. Figure 6 is a flowchart of receiving a RIS state according to an embodiment of the present invention. As shown in figure 6, the flow includes the following steps:
At S602, BS receives state information fed back by Reconfigurable Intelligent Surface (RIS) controller, wherein the state information includes state information of the RIS controller and state information of a plurality of RIS boards managed by the RIS controller.

By means of the described steps, the BS receives state information about a RIS controller fed back by an RIS controller and state information of a plurality of RIS boards managed by the RIS controller, the problem in the related art that a RIS abnormal state cannot be found and solved in time due to the fact that the RIS state information cannot be monitored and managed is solved, thus, the capability of monitoring the RIS state information and processing the RIS abnormality in time is improved, and the deterioration of the network performance is prevented.

The entity for performing the foregoing steps may be, but is not limited to, a base station.

In an embodiment, figure 7 is a flowchart of a method for receiving a RIS state according to embodiments of the present invention. As shown in figure 7, the flow includes the following steps:
At S702, the BS receives state information actively feeding back by the RIS controller. The step S702 includes an initial access stage of the RIS controller to the BS, wherein the RIS controller may complete the access process at the BS through a random access process.

In an embodiment, figure 8 is a flowchart of a method for receiving a RIS state indication according to embodiments of the present invention. As shown in figure 8, the flow includes the following steps:
At S802: the BS sends a state information query instruction to the RIS controller;
At S804: the BS receives state information fed back by the RIS controller according to the state information query instruction. The above S802 and S804 occur during a stable operation phase of the RIS controller and the plurality of RIS boards managed by the RIS controller.

In the embodiment shown in figure 8, the BS may send a state information query instruction to the RIS controller through a synchronous signal block (SSB) or a physical downlink shared channel (PDSCH).

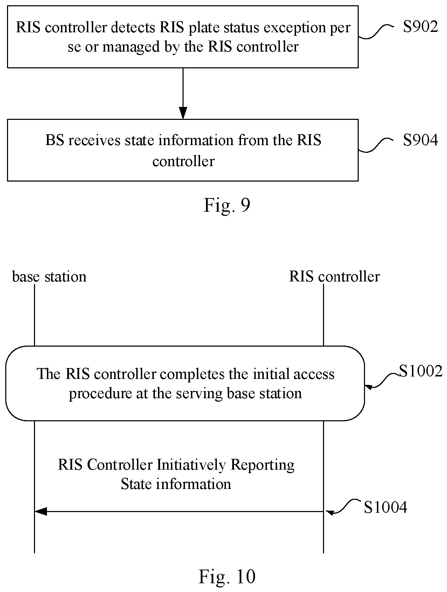

In an embodiment, figure 9 is a flowchart of a method for receiving a RIS state according to embodiments of the present invention. As shown in figure 9, the flow includes the following steps:
At S902: the RISC controller detects abnormality of its own or a plurality of RIS plate states managed by the RIS controller;
At S904, the BS receives state information from the RIS controller. The above described S902 and S904 occur during a stable operation phase of the RIS controller and its managed plurality of RIS boards.

In the embodiments shown in figure 6 to figure 9, the state information of the RIS controller may include at least one of an electric quantity state, a power consumption value, a temperature value and an operating state.

In the embodiments shown in figure 6 to figure 9, the state information of each RIS board may include at least one of the following: a power consumption value, a temperature value, a codebook read-back state, a coordinate, an azimuth, and a downtilt.

In the embodiments shown in figure 6 to figure 9, the BS may receive the state information fed back by the RIS controller through a Physical Random Access Channel (PRACH) or a Physical Uplink Shared Channel (PUSCH).

To facilitate understanding of the technical solutions provided in the embodiments of the present invention, the following describes the technical solutions in detail with reference to specific scenario embodiments.

The embodiments of the present invention are mainly applicable to scenarios where a Reconfigurable Intelligent Surface (RIS) is used to enhance the coverage of a base station. By monitoring and reporting the state of the RIS at an accessed base station, including the electric charge or power consumption, temperature, the operating state of the reflection/transmission units, and the operational parameters of the RIS panel, timely identification and resolution of network performance deterioration caused by abnormal states are enabled.

### Scenario Embodiment 1

After the initial access of the base station, the RIS controller reports state information of its own and its managed RIS board. Figure 10 is a flowchart of reporting state information by a RISC controller according to an embodiment of the scenario of the present invention. As shown in figure 10, the flow includes the following steps:
At S1002, the RIS controller completes an access process at the base station through a random access process;
At S1004: the RIS controller reports state information of itself and its managed RIS board proactively.

The state information that the RIS controller needs feed back to the BS includes, but is not limited to, the following information:
(1) The state of charge of the RIS controller itself (normal/low charge, or percentage of charge);
(2) A power consumption value of the RIS controller itself, and power consumption values of various RIS boards managed by the RIS controller;
(3) A temperature value of the RIS controller itself and a temperature value of each RIS board managed the RIS controller;
(4) An operating state of the RIS controller itself, and a codebook read-back state of each RIS board managed the RIS controller;
(5) Coordinates, azimuth, and downtilt of each RIS board managed by the RIS controller.

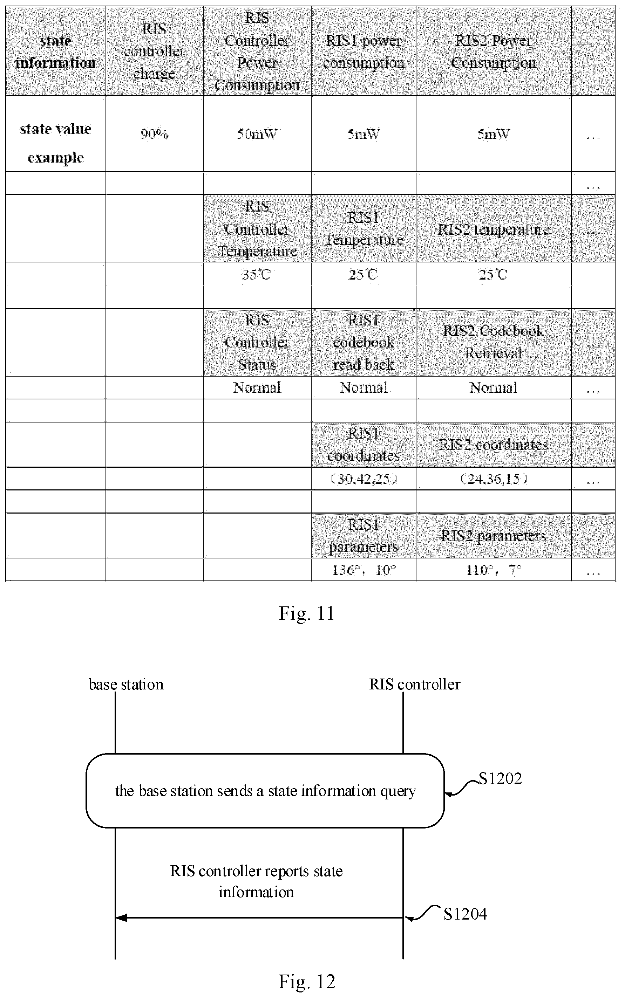

Figure 11 shows the content of state information reported by the RIS controller to the BS in the first embodiment of the scenario.

### Scenario Embodiment 2

After the RIS controller and the RIS managed by the RIS controller enter into a stable operating state, the RIS controller reports state information of the RIS controller and the RIS managed by the RIS controller after receiving a state query instruction from the base station. Figure 12 is a flowchart of reporting state information by an RISC controller according to embodiments of the scenario of the present invention. As shown in figure 12, the flow includes the following steps:
At S1202, a base station sending a state information query instruction to an RIS controller;
At S1204, the RIS controller reports state information about itself and the RIS board managed by the RIS controller.

A base station issues a state information query instruction to a RIS controller via an SSB or PDSCH channel, and the RIS controller can complete feedback via a PRACH and a PUSCH channel.

The state information that the RIS controller needs to feed back to the base station includes, but is not limited to, the following information:
(1) The state of charge of the RIS controller itself (normal/low charge, or percentage of charge);
(2) A power consumption value of the RIS controller itself, and power consumption values of various RIS boards managed by the RIS controller;
(3) A temperature value of the RIS controller itself and a temperature value of each RIS board managed by the RIS controller;
(4) An operating state of the RIS controller itself, and a codebook read-back state of each RIS board managed by the RIS controller;
(5) Coordinates, azimuth, and downtilt of each RIS board managed by the RIS controller.

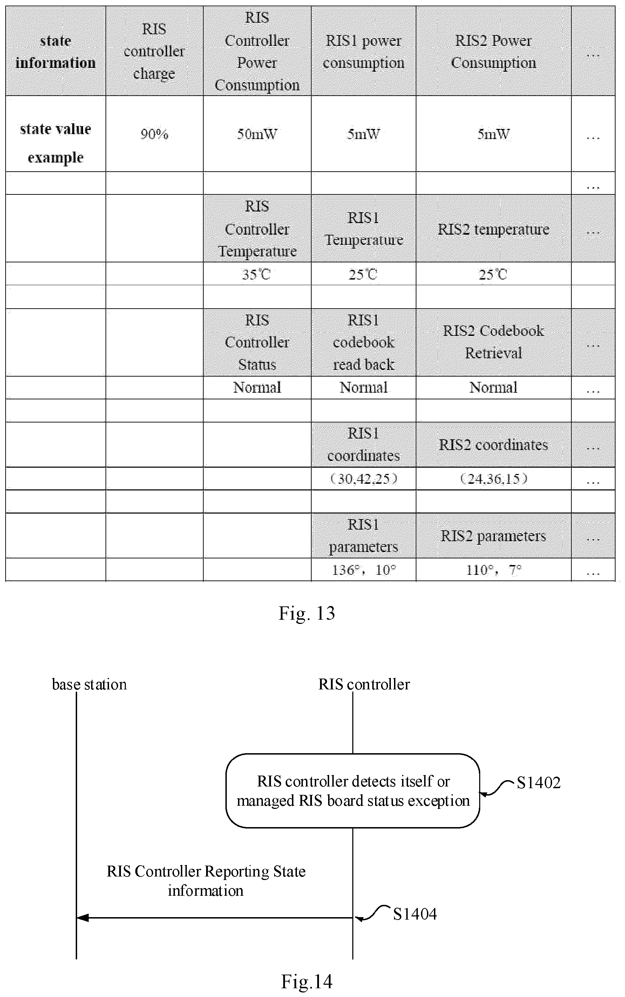

Figure 13 shows the content of state information reported by the RIS controller to the BS in the second embodiment of the scenario.

### Scenario Embodiment 3

The RISC controller detects an abnormal state of its or its managed RIS board in a stable running state, and reports state information of its or its managed RIS board.

Figure 14 is a flowchart of reporting state information by a RISC controller according to an embodiment of the scenario of the present invention, and as shown in figure 14, the flow includes the following steps:
At S1402, the RIS controller self-detects that there is a state abnormality in itself or the RIS board managed thereby;
At S1404, the RIS controller actively reports state information about itself and the RIS board managed thereby.

The state information that the RIS controller needs to feed back to the base station includes, but is not limited to, the following information:
(1) The power of the RIS controller itself is too low;
(2) Power consumption exception of the RIS controller itself, or power consumption exception of each RIS board managed by the RIS controller;
(3) Temperature abnormality of the RIS controller itself, or temperature abnormality of each RIS board managed by the RIS controller;
(4) The working state of the RIS controller itself is abnormal, or the RIS board managed thereby has a codebook read-back abnormality;
(5) The RIS board managed by the RIS controller has the abnormality of coordinates, azimuth angle, and down tilt angle.

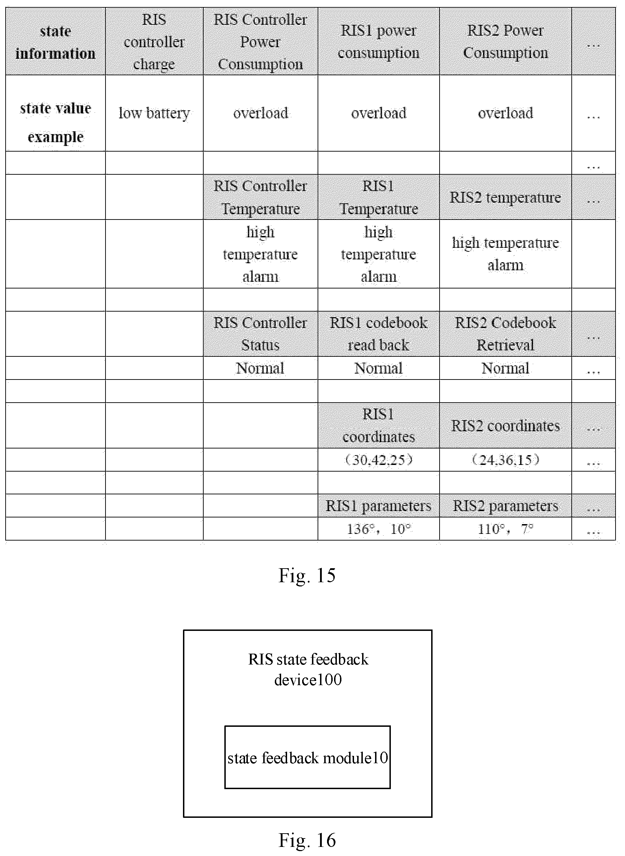

Figure 15 shows the content of state information reported by the RIS controller to the BS in the third embodiment of the scenario.

Through the description of the foregoing embodiments, a person skilled in the art may clearly understand that the method according to the foregoing embodiments may be implemented by software in addition to a necessary universal hardware platform, and definitely may also be implemented by hardware. However, in many cases, the former is a preferred implementation. Based on such understanding, the technical solutions of the embodiments of the present invention essentially or the part contributing to the prior art may be embodied in the form of a software product, the computer software product is stored in a storage medium (such as a ROM/RAM, a magnetic disk and an optical disk), and includes several instructions such as query instructions, the state information processing and summarization may reside in a program, storage medium, device, etc., completing instruction sending and state information feedback in a forwarding manner.

The present embodiment further provides a RIS state feedback apparatus and a RIS state receiving apparatus. The apparatus is used for implementing the described embodiments and preferred implementation modes, and what has been described will not be elaborated. The term "module" or "unit", as used hereinafter, is a combination of software and/or hardware capable of realizing a predetermined function. Although the apparatus described in the following embodiment is preferably implemented by software, implementation of hardware or a combination of software and hardware is also possible and conceived.

Figure 16 is a structural block diagram of a RIS state feedback apparatus according to an embodiment of the present invention. The apparatus 100 may be located in a RIS controller. As shown in figure 16, the apparatus 100 includes a state feedback module 10. The state feedback module 10 is used for feeding state information back to a base station (BS), wherein the state information includes state information about an RIS controller and state information about a plurality of RIS boards managed by the RIS controller.

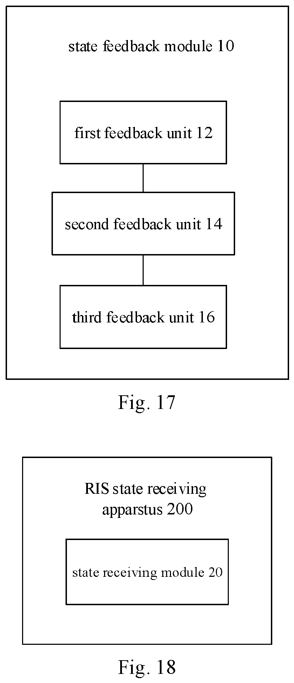

In an embodiment, figure 17 is a structural block diagram of a RIS state feedback apparatus according to an embodiment of the present invention. As shown in figure 17, the state feedback module 10 includes at least one of the following units: a first feedback unit 12, a second feedback unit 14 and a third feedback unit 16.

The first feedback unit 12 is adapted to feed back state information to the BS on its own initiative during an initial access phase of the RIS controller to the BS.

And a second feedback unit 14 configured to receive a state information query instruction from the BS during stable operation of the RIS controller and a plurality of RIS boards managed by the RIS controller, and feed back state information to the BS according to the state information query instruction.

The third feedback unit 16 is configured to detect state abnormality of the RIS controller or a plurality of RIS boards managed by the RIS controller during stable operation of the RIS controller and the plurality of RIS boards managed by the RIS controller, and feed back state information to the BS.

Figure 18 is a structural block diagram of an apparatus for receiving a RIS state according to an embodiment of the present invention. The apparatus 200 may be located in a base station. As shown in figure 18, the apparatus 200 includes a state receiving module 20. The state receiving module 20 is used for receiving state information fed back by an intelligent super-surface RIS controller, wherein the state information includes state information about the RIS controller and state information about a plurality of RIS boards managed by the RIS controller.

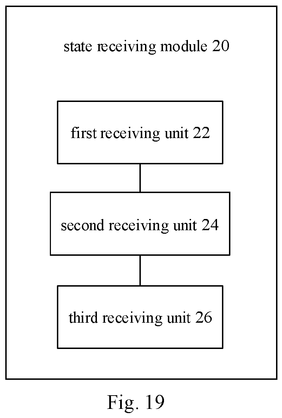

In an embodiment, figure 19 is a structural block diagram of a RIS state receiving apparatus according to an embodiment of the present invention. As shown in figure 19, a state receiving module 20 at least includes one of the following units: a first receiving unit 22, a second receiving unit 24, and a third receiving unit 26.

The first receiving unit 22 is configured to receive state information initiatively fed back by the RIS controller at an initial access stage of the RIS controller to the BS.

A second receiving unit 24, configured to send a state information query instruction to the RIS controller and receive state information fed back by the RIS controller during stable operation phases of the RIS controller and a plurality of RIS boards managed by the RIS controller.

A third receiving unit 26, configured to receive state information fed back by the RIS controller when the RIS controller and the plurality of RIS boards managed by the RIS controller operate stably and the RIS controller detects that the state of the RIS controller or the plurality of RIS boards managed by the RIS controller is abnormal.

It should be noted that each module may be implemented by software or hardware. The latter may be implemented in the following manner, but is not limited thereto. All the modules are located in a same processor; alternatively, the modules are located in different processors in an arbitrary combination.

Embodiments of the present invention further provide a computer readable storage medium. The computer readable storage medium stores a computer program, wherein the computer program is configured to execute the steps in any one of the method embodiments.

In an embodiment, the computer readable storage medium may include, but is not limited to, any medium that can store a computer program, such as a USB flash drive, a read-only memory (Read-Only Memory, ROM for short), a random access memory (Random Access Memory, RAM for short), a removable hard disk, a magnetic disk, or an optical disc.

An embodiment of the present invention also provides an electronic device, including a memory and a processor, wherein the memory stores a computer program, and the processor is configured to run the computer program so as to execute the steps in any of the described method embodiments.

In an embodiment, the electronic apparatus can further include a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

Obviously, those skilled in the art should understand that each module or each step of the described embodiments of the present invention can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus, furthermore, in some cases, the shown or described steps may be executed in an order different from that described here, or they are made into integrated circuit modules respectively, or a plurality of modules or steps therein are made into a single integrated circuit module for implementation. In this way, the embodiments of the present invention are not limited to any specific combination of hardware and software.

The foregoing descriptions are merely exemplary embodiments of the present invention, but are not intended to limit the embodiments of the present invention. For those skilled in the art, the embodiments of the present invention may have various modifications and variations. Any modifications, equivalent replacements, improvements and the like made within the principle of the embodiments of the present invention shall belong to the scope of protection of the embodiments of the present invention.

## Claims

1. A method for RIS state feedback, comprising:
feeding back, by Reconfigurable Intelligent Surface ,RIS, ,state information to a Base Station ,BS, , wherein the state information comprises state information of the RIS controller and state information of a plurality of RIS boards managed by the RIS controller.

2. The method according to claim 1, wherein feeding back, by Reconfigurable Intelligent Surface ,RIS, , state information to a Base Station ,BS, , comprising:
actively feeding back, by the RIS controller, the state information to the BS during an initial access phase of the RIS controller to the BS.

3. The method according to claim 1, wherein feeding back, by Reconfigurable Intelligent Surface ,RIS, , state information to a Base Station ,BS, , comprising:
receiving, by the RIS controller, a state information query instruction from the BS during a stable working phase of the RIS controller and the plurality of RIS boards managed by the RIS controller;
feeding back, by the RIS controller, the state information to the BS according to the query instruction.

4. The method according to claim 1, wherein feeding back, by Reconfigurable Intelligent Surface ,RIS, , state information to a Base Station ,BS, , comprising:
during a stable operation stage of the RIS controller and the plurality of RIS boards managed by the RIS controller, when the RIS controller detects that the RIS controller itself or the plurality of RIS boards managed by the RIS controller are in an abnormal state, feeding back, by the RIS controller, the state information to the BS.

5. The method according to any one of claims 1-4, wherein the state information of the RIS controller comprises at least one of the following: an electric quantity state, a power consumption value, a temperature value, and a working state.

6. The method according to any one of claims 1-4, wherein the state information of each RIS board comprises at least one of the following: a power consumption value, a temperature value, a codebook read-back state, a coordinate, an azimuth angle, and a downtilt angle.

7. The method according to any one of claims 1-4, wherein the RIS controller feeds back the state information to the BS through a Physical Random Access Channel ,PRACH, or a Physical Uplink Shared Channel ,PUSCH, .

8. The method according to claim 3, wherein the RIS controller receives the state information query instruction sent by the BS through a synchronous signal block ,SSB, or a physical downlink shared channel ,PDSCH, .

9. A method for RIS state receiving, comprising:
receiving, by a base station ,BS, , state information fed back by Reconfigurable Intelligent Surface ,RIS, , wherein the state information comprises state information of the RIS controller and state information of a plurality of RIS boards managed by the RIS controller.

10. The method according to claim 9, wherein receiving, by a base station ,BS, , state information fed back by the RIS, comprising:
receiving, by the BS, the state information fed back by the RIS during an initial access stage of the RIS controller to the BS.

11. The method according to claim 9, wherein receiving, by a base station ,BS, , state information fed back by the RIS, comprising:
sending, by the BS, a state information query instruction to the RIS controller, during stable operation phases of the RIS controller and the plurality of RIS boards managed thereby;
receiving, by the BS, the state information fed back by the RIS controller according to the state information query instruction.

12. The method according to claim 9, wherein receiving, by a base station ,BS, , state information fed back by the RIS, comprising:
receiving, by the BS, the state information fed back by the RIS controller when detecting abnormity of the state of the RIS board corresponding to the RIS controller or managed by the RIS controller.

13. The method according to any one of claims 9-12, wherein the state information of the RIS controller comprises at least one of the following: an electric quantity state, a power consumption value, a temperature value, and a working state.

14. The method according to any one of claims 9-12, wherein the state information of each RIS board comprises at least one of the following: a power consumption value, a temperature value, a codebook read-back state, a coordinate, an azimuth angle, and a downtilt angle.

15. The method according to any one of claims 9-12, wherein the BS receives the state information fed back by the RIS controller through a Physical Random Access Channel ,PRACH, or a Physical Uplink Shared Channel ,PUSCH, .

16. The method according to claim 11, wherein the BS sends the state information query instruction to the RIS controller through a synchronous signal block ,SSB, or a physical downlink shared channel ,PDSCH, .

17. A RIS state feedback apparatus located on a RIS controller, comprising:
a state feedback module configured to feed back state information to a base station ,BS, , wherein the state information comprises state information about the RIS controller and state information about a plurality of RIS boards managed by the RIS controller.

18. The apparatus according to claim 17, wherein the state feedback module comprises at least one of:
a first feedback unit, configured to, at an initial access stage of the RIS controller to the BS, actively feed back the state information to the BS;
a second feedback unit, configured to receive a state information query instruction from the BS during a stable operating phase of the plurality of RIS boards managed by the RIS controller, and feed back the state information to the BS according to the state information query instruction;
a third feedback unit, configured to detect, during a stable operation stage of the RIS controller and the plurality of RIS boards managed by the RIS controller, a state exception of the RIS controller or the plurality of RIS boards managed by the RIS controller, and feed back the state information to the BS.

19. A RIS state receiving apparatus located in a base station, comprising:
a state receiving module for receiving state information fed back by an intelligent super-surface RIS controller, wherein the state information comprises state information about the RIS controller and state information about a plurality of RIS boards managed by the RIS controller.

20. The device according to claim 19, wherein the state receiving module comprises at least one of the following: a first receiving unit, configured to receive the state information actively fed back by the RIS controller during an initial access phase of the RIS controller accessing the BS;
a second receiving unit, configured to send a state information query instruction to the RIS controller and receive the state information fed back by the RIS controller during stable operation of the RIS controller and the plurality of RIS boards managed by the RIS controller;
a third receiving unit, configured to receive the state information fed back by the RIS controller when the RIS controller and the plurality of RIS boards managed by the RIS controller operate stably and the RIS controller detects that the RIS controller or the plurality of RIS boards managed by the RIS controller are in an abnormal state.

21. A computer readable storage medium, wherein the computer readable storage medium stores a computer program, and the computer program is configured to, when executed by a processor, implement the method as claimed in any one of claims 1 to 16.

22. An electronic apparatus, comprising a memory, a processor, and a computer program stored in the memory and capable of running on the processor, the processor is configured to execute the computer program to implement the method as claimed in any one of claims 1 to 16.
